# EUROPÄISCHE PATENTSCHRIFT

(11) **EP 0 510 405 B1**
(45) Veröffentlichungstag und Bekanntmachung des Hinweises auf die Patenterteilung: **19.01.1994**
(21) Anmeldenummer: 92105719.6
(22) Anmeldetag: 02.04.1992
(51) Int. Cl.: B65G 1/14

(54) **Warenaufnahme zur gestapelten oder aneinandergereihten Lagerung von Waren**
Storage device for storing articles in a stacked or grouped form
Dispositif de stockage pour emmagasiner des produits de façon empilée ou groupée

(30) Priorität: 26.04.1991 DE 4113724; 26.04.1991 DE 9105188 U
(43) Veröffentlichungstag der Anmeldung: 28.10.1992
(73) Patentinhaber: Cornet, Harald, D-66994 Dahn (DE); Birkle, Helmut, Dipl.-Ing. (FH), D-79331 Teningen (DE)
(72) Erfinder: Cornet, Harald, D-66994 Dahn (DE); Birkle, Helmut, Dipl.-Ing. (FH), D-79331 Teningen (DE)
(74) Vertreter: Glöser, Otto

(56) Entgegenhaltungen:
- EP-A- 0 215 328
- EP-A- 0 339 214
- DE-A- 2 930 053
- DE-U- 9 105 188

## Beschreibung

Die Erfindung betrifft eine Warenaufnahme zur gestapelten oder aneinandergereihten Lagerung von Waren, die zumindest einen Stützenträger aufweist, an dem mehrere in dessen Längsrichtung benachbarte Warenstützen verschwenkbar gehalten sind, welche aus einer trägernahen Ruhestellung gegenüber dem Stützenträger in eine im Zufuhrweg der Ware angeordnete Bereitsschaftsstellung und von der Bereitsschaftstellung in eine Haltestellung ausschwenkbar sind, wobei beim Verschwenken einer Warenstütze in deren Haltestellung die ihr benachbarte Warenstütze mittels einer Mitnahmevorrichtung aus ihrer Ruhestellung in ihre Bereitsschaftsstellung bringbar ist.

Man kennt beispielsweise aus dem DE-A-2 930 053 eine derartige behälter- oder gestellförmige Warenaufnahme, die an jedem ihrer miteinander zusammenwirkenden Stützenträger mehrere, dem Lagergut jeweils als Abstützungen dienende Warenstützen hat, die zur horizontalen Einlagerung des Lagergutes übereinander an einem ihnen zugeordneten Stützenträger gehalten sind. Dabei können die Stützenträger beispielsweise in vier Eckbereichen dieser vorbekannten Warenaufnahme eingeordnet sein. Die Warenstützen sind einstückig ausgebildet und am Stützenträger jeweils um eine Schwenkachse verschwenkbar gelagert. Während die an einem fingerförmigen Vorsprung jeder Warenstütze vorgesehene Stützfläche in den Zufuhrweg des Lagergutes ausgeschwenkt werden kann, ist der gegenüber der Stützfläche auf der anderen Seite der Schwenkachse angeordnete Teil der Warenstütze als ein als Rückstellkraft dienendes Gegengewicht ausgebildet. Wird nun eine einzulagernde Ware zwischen die zusammenwirkenden Stützenträger geschoben, so verschwenkt beim Einschieben der Waren die in Zufuhr- oder Entnahmerichtung vordere oder obere, noch unbelegte Warenstütze jedes Stützenträgers von einer Bereitschaftstellung in ihre Haltestellung. Mittels einer Mitnahmevorrichtung wird dabei die Schwenkbewegung dieser Warenstützen auch auf die zur Zufuhr- oder Entnahmeseite hin darüber angeordnete Warenstütze übertragen, die ihrerseits aus ihrer außerhalb des Zufuhrweges angeordneten Ruhestellung in die Bereitschaftstellung verschwenkt. Bei Entnahme der eingelagerten Ware aus dieser vorbekannten Warenaufnahme wird auch die von der Ware ursprünglich beaufschlagte Warenstütze entlastet und schwenkt in Folge ihres als Gegengewicht ausgebildeten Stützenteiles zum Stützenträger hin ein.

Die Mitnahmevorrichtung kann dabei entweder als ein jeweils zwei benachbarte Warenstützen eines Stützenträger miteinander verbindendes Kipphebel-System ausgebildet sein oder aber Mitnehmer aufweisen, die jeweils an einer der Warenstützen vorgesehen sind und die zur Zufuhrseite hin jeweils darüber angeordnete Warenstützen beaufschlagen.

Diese vorbekannten, teilweise auch als sogenannte Klinkentürme bezeichneten Warenaufnahmen sind als Transport-, Verpackungs- und Lagerbehälter sowie als Regalsysteme vorteilhaft einsetzbar und können sowohl automatisch wie auch manuell be- und entladen werden. Durch ihren robusten Aufbau werden sie zunehmend auch als Mehrwegeverpackungen eingesetzt.

Nachteilig bei diesen vorbekannten Warenaufnahmen ist jedoch, daß die Stützflächen ihrer Warenstützen nur vergleichsweise schmal ausgebildet werden können und meist nur geringfügig in den Zufuhrweg einschwenkbar sind. Größere Stützflächen würden der für die Rückstellbewegung der Warenstützen benötigten Rückstellkraft entgegenwirken und eventuell auch die Schwenkbewegung der jeweils benachbarten Warenstützen behindern. Erschütterungen, wie sie beispielsweise beim Transport dieser Warenaufnahmen vorkommen, können zu einem Anheben des auf den Warenstützen aufliegenden Stapelgutes und infolgedessen zu einer Entlastung sowie einem unerwünschten Rückschwenken einzelner Warenstützen führen, so daß einzelne Teile des in diesen Warenaufnahmen transportierten Stapelgutes eventuell unkontrolliert aufeinander fallen. Um die zwischen den Warenstützen eingelagerten Waren in den Warenaufnahmen zu sichern, werden zwischen diesen teilweise auch Distanzstücke, beispielsweise aus Karton- oder Kunststoffmaterial, eingefügt, die nach der Entnahme des Stapelgutes meist nicht wieder verwendet werden und daher etwa bei einer Massenproduktion nicht unerhebliche zusätzliche Kosten verursachen, da die Warenstützen aufgrund des fest vorgegebenen Schwenkweges (Kreisbahn) an ihrer Unterseite nicht als Niederhalter für zuvor eingelegte Ware ausgebildet werden können. Der zum Niederhalten benötigte Bereich würde bereits in Ruhestellung in den Zufuhrweg der Ware ragen. Vor allem aber sind die Warenstützen dieser vorbekannten Warenaufnahmen kaum an die Besonderheiten und die Formgebung des darin einzulagernden Warengutes anpaßbar, wodurch die Gefahr unerwünschter Beeinträchtigungen oder Beschädigungen dieser Waren noch zusätzlich erhöht wird.

Es besteht daher insbesondere die Aufgabe, eine Warenaufnahme der eingangs erwähnten Art zu schaffen, die eine sichere lageunabhängige Einlagerung von Waren gestattet und die mit geringem Aufwand an warenspezifische Anforderungen sowie den jeweiligen Verwendungszweck anpaßbar ist.

Die erfindungsgemäße Lösung dieser Aufgabe besteht bei der Warenaufnahme der eingangs erwähnten Art insbesondere darin, daß die Warenstützen jeweils über zumindest zwei Schwenkarme mit dem ihnen zugeordneten Stützenträger verbunden sind, daß die Schwenkarme sowohl am Stützenträger als auch an der entsprechenden Warenstütze schwenkbar angelenkt sind,daß die Schwenkachsen der Schwenkarme am Stützenträger und an der Warenstütze jeweils zueinander versetzt sind und daß durch ein Verschwenken der Schwenkarme die Winkellage der mit ihnen jeweils verbundenen Warenstütze relativ zu diesen Schwenkarmen in vorgegebener Weise veränderbar ist. Das Verschwenken der Warenstützen mittels der Schwenkarme erlaubt eine lageunabhängige Aus- und Einschwenkbewegung der Warenstützen. Durch ihre gelenkige Verbindung mit den Schwenkarmen können die Warenstützen mit geringem konstruktivem Aufwand auch an teilespezifische Besonderheiten der einzulagernden Ware sowie an den jeweiligen Verwendungszweck der erfindungsgemäßen Warenaufnahme angepaßt werden. Durch überlagerte Bewegungen der Schwenkarme sowie der ihnen zugeordneten Warenstütze kann letztere auch bei geringem Abstand der an einem Stützenträger vorgesehenen Warenstützen gut und ohne sich untereinander zu behindern aus einer außerhalb des Zufuhrweges angeordneten platzsparenden Ruhestellung in eine Haltestellung bewegt werden, die auch vergleichsweise weit in den Zufuhrweg hineinreichen kann.

Dabei sieht eine bevorzugte Ausführungsform gemäß der Erfindung von eigener schutzwürdiger Bedeutung vor, daß jeder Warenstütze ein Schwenkarm-Paar aus zwei Schwenkarmen zugeordnet ist, die an ihrer einen Armseite mit dem Stützenträger und an ihrer gegenüberliegenden Armseite mit der Warenstütze jeweils derart verschwenkbar verbunden sind, daß sie gemeinsam ein Gelenkviereck bilden.

Zweckmäßig ist es, wenn die einer Warenstütze zugeordneten und in den Schwenkebenen versetzt zueinander angeordneten Gelenkstellen mit der Warenstütze und dem Stützenträger verbundenen Schwenkarme in ihrer Längserstreckung nebeneinander oder über Kreuz angeordnet sind. Insbesondere bei einer überkreuzten Anordnung der Schwenkarme einer Warenstütze überlagern sich die Schwenkbewegungen der Schwenkarme sowie der ihnen zugeordneten Warenstütze derart, daß diese eine vergleichsweise weitgehende Drehbewegung beim Verschwenken der Schwenkarme durchführt und beispielsweise mit einem warenseitig an ihr vorgesehenen Vorsprung in eine entsprechende Aussparung der Ware eingreifen kann.

Eine besonders einfache und vorteilhafte Ausführungsform gemäß der Erfindung sieht vor, daß die am Stützenträger und/oder die an den Warenstützen vorgesehenen Schwenkachsen der Schwenkarme als etwa parallele Schwenkbolzen ausgebildet sind. Der geringe Herstellungsaufwand der erfindungsgemäßen Warenaufnahme wird noch zusätzlich begünstigt, wenn die einander unmittelbar benachbarten Schwenkarme benachbarter Warenstützen eine gemeinsame Schwenkachse am Stützenträger haben.

Um eine in der Schwenkebene durchzuführende Drehbewegung der Warenstütze gegenüber ihren Schwenkarmen zu erreichen, kann es zweckmäßig sein, wenn zur Steuerung dieser Relativbewegung einer Warenstütze die an ihr an unterschiedlichen Gelenkstellen angreifenden Schwenkarme jeweils unterschiedliche Armlängen aufweisen. Je nachdem, ob der zur Zufuhr- oder Entnahmeseite der erfindungsgemäßen Warenaufnahme hin jeweils obere oder vordere Schwenkarm einer Warenstütze kürzer oder länger ausgebildet ist, kann die entsprechende Warenstütze eine Drehbewegung in oder entgegen dem Uhrzeigersinn durchführen.

Falls sich die Bewegungslinien der zwischen den Schwenkarmen und ihrer Warenstütze vorgesehenen Gelenkstellen beim Verschwenken der Warenstütze von ihrer Ruhestellung in ihre Haltestellung und umgekehrt nahekommen oder die Schwenkarme in der Ruhestellung eng aneinanderliegen, kann es zweckmäßig sein, wenn sich die Schwenkarme einer Warenstütze auf voneinander beabstandeten, etwa parallelen Schwenkebenen bewegen.

Um die lageunabhängige, d.h. die horizontale oder vertikale Verwendung der erfindungsgemäßen Warenaufnahme zu begünstigen, kann es zweckmäßig sein, wenn jeder Warenstütze eine Rückstellkraft zugeordnet ist, die bei Entlastung dieser Warenstütze die mit ihr verbundenen Schwenkarme in deren Ruhestellung einschwenkt. Dabei ist es vorteilhaft, wenn als Rückstellkraft jeweils eine Schenkelfeder vorgesehen ist, da solch eine Schenkelfeder besonders robust und dementsprechend wartungsarm ist.

Eine einfache und dementsprechend vorteilhafte Ausführungsform gemäß der Erfindung sieht vor, daß jeweils an dem zur Zufuhr- oder Entnahmeseite hin vorderen oder oberen Schwenkarm einer Warenstütze ein Mitnehmer vorgesehen ist, der bei einer Schwenkbewegung dieser Warenstütze in ihre Haltestellung den unteren oder hinteren Schwenkarm der zur Zufuhr- oder Entnahmeseite hin darüber oder davor angeordneten Warenstütze beaufschlagt.

Um jedoch auch breite Waren in der erfindungsgemäßen Warenaufnahme einlagern und um den Abstand der an einem Stützenträger gehaltenen Warenstützen voneinander groß dimensionieren zu können, kann es zweckmäßig sein, wenn ein Schwenkarm einer Warenstütze mit einem Schwenkarm der zur Zufuhr- oder Entnahmeseite jeweils davor oder darüber angeordneten Warenstütze mittels eines Verbindungsarmes verbunden ist, daß jeder Verbindungsarm an den ihm zugeordneten Schwenkarmen gelenkig angreift, daß die Gelenkstelle dieser Verbindungsarme an dieser jeweils davor oder darüber angeordneten Warenstütze als Langloch ausgebildet ist, in der ein Mitnehmer verschieblich geführt ist und daß dieser Mitnehmer beim Verschwenken der jeweils unteren oder hinteren Warenstütze in ihre Haltestellung in einer Endstellung des Langloches angeordnet ist. Dabei kann das Langloch entweder am Verbindungsarm oder an dem Schwenkarm der jeweils davor oder darüber angeordneten Warenstütze vorgesehen sein.

Nach einer Weiterbildung gemäß der Erfindung, der auch eigene schutzwürdige Bedeutung zukommen kann, ist vorgesehen, daß an den Warenstützen jeweils zumindest ein Hilfsbügel vorgesehen ist, der an einer Gelenkstelle verschwenkbar an der Warenstütze angreift und daß der (die) Hilfsbügel mit einem vorzugsweise aus zumindest einem Koppelglied bestehenden Getriebe verbunden ist, welches die Relativbewegung der Warenstütze gegenüber den ihr zugeordneten Schwenkarmen in eine Relativbewegung des Hilfsbügels gegenüber dieser Warenstütze umsetzt. Dieser Hilfsbügel kann beispielsweise als zusätzlicher Niederhalter für die einzulagernde Ware in den Zufuhrweg einschwenken, mit der entsprechenden Warenstütze einen öffen- und schließbaren Greifer bilden, als Zentrierhilfe für das zwischen den Stützenträgern einzulagernde Stapelgut dienen oder auch Dämpfungszwischenlagen zwischen der eingelagerten Ware und der zur Zufuhr- oder Entnahmeseite hin jeweils davor oder darüber angeordneten Warenstütze bilden.

Eine weitere vorteilhafte Ausführungsform von ebenfalls eigenständig schutzwürdiger Bedeutung besteht darin, daß die einem Stützenträger zugeordneten Warenstützen jeweils als Niederhalter für die in Zufuhr- oder Entnahmerichtung hinter oder unter ihr angeordnete Warenstütze ausgebildet sind und daß die Warenstützen einen Niederhalter-Anschlag aufweisen, der die in Zufuhr- oder Entnahmerichtung jeweils dahinter oder darunter angeordnete Warenstütze und/oder die von dieser Warenstütze abgestützte Ware bereichsweise beaufschlagt. Bei einer solchen Ausführungsform sichert die zur Zufuhr- oder Entnahmeseite hin vordere oder obere Warenstütze die in Zufuhrrichtung hinter ihr angeordneten Warenstützen sowie gegebenenfalls auch das darauf befindliche Lagergut. Um nach dem vollständigen Befüllen der erfindungsgemäßen Warenaufnahme die darin eingelagerten Waren gegeneinander zu sichern, kann es zweckmäßig sein, wenn die zur Zufuhr- oder Entnahmeseite hin oberste oder vorderste Warenstütze eines Stützenträgers in ihrer Haltestellung verriegelbar ist. Bei der erfindungsgemäßen Warenaufnahme muß lediglich die zur Zufuhr- oder Entnahmeseite hin oberste oder vorderste Warenstütze eines Stützenträgers in ihrer Haltestellung gesichert werden, um auch die in Zufuhrrichtung dahinter oder darunter angeordneten Warenstützen ebenfalls in ihre Haltestellung zu fixieren.

Weitere Merkmale der Erfindung ergeben sich aus der folgenden Beschreibung von Ausführungsbeispielen in Verbindung mit den Ansprüchen und der Zeichnung.
Die einzelnen Merkmale können je für sich oder zu mehreren bei einer Ausführungsform der Erfindung verwirklicht sein.

Es zeigt:
- **Fig. 1**: mehrere an einem Stützenträger übereinander angeordnete Warenstützen einer Warenaufnahme in einer Seitenansicht,
- **Fig. 2**: die Warenstützen aus Fig. 1 in einer seitlichen Teil-Darstellung, wobei drei dieser Warenstützen von Warenstücken beaufschlagt werden,
- **Fig. 3**: die Warenstützen aus Fig. 1 und 2 in ihrer ebenfalls seitlich dargestellten Haltestellung, wobei die zu Zufuhr- oder Entnahmeseite hin obere Warenstütze mittels eines Sperr-Riegels in ihre Halteposition verriegelt ist,
- **Fig. 4**: eine der Warenstützen der Warenaufnahme aus den Fig. 1 bis 3 in drei seitlichen Bewegungsdarstellungen,
- **Fig. 5**: eine Warenstütze, änlich der aus Fig. 1 bis 4, in einer Draufsicht,
- **Fig. 6**: eine Warenstütze in zwei seitlichen Bewegungsdarstellungen, die beim Verschwenken in eine Ausnehmung oder Hinterschneidung eines Warenstückes einschwenkt,
- **Fig. 7**: eine Warenstütze in ihrem Bewegungsablauf, wobei die Warenstütze mit einem warenseitig angeordneten Haltevorsprung in das Rohrinnere eines rohrförmigen Warenstückes einschwenkbar ist,
- **Fig. 8**: zwei benachbarte Warenstützen, die über einen Verbindungsarm miteinander gekoppelt sind und
- **Fig. 9**: eine Warenstütze, ännlich der aus Fig. 1 bis 4, wobei diese Warenstütze zusätzlich einen als Niederhalter für die Ware vorgesehenen Hilfsbügel aufweist.

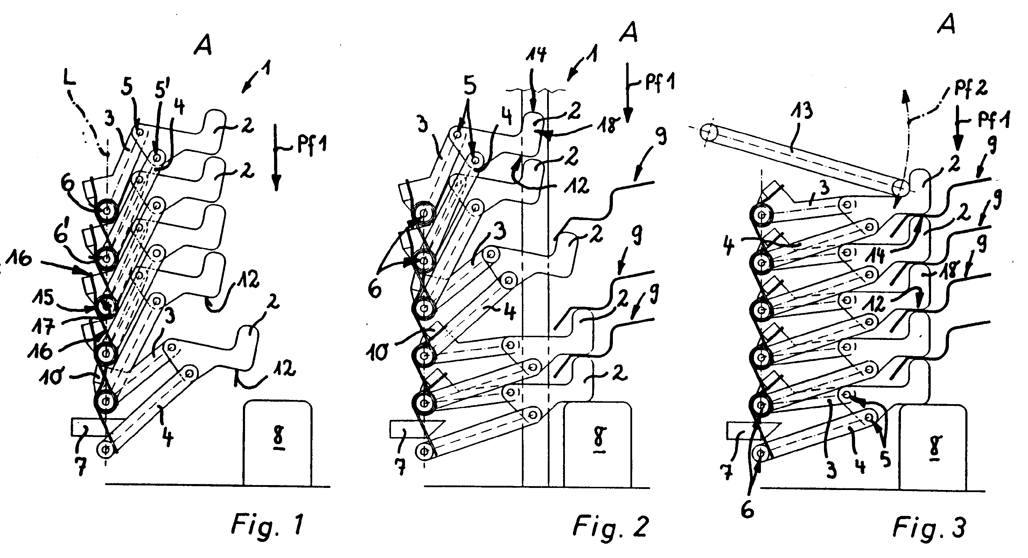

In den Figuren 1 bis 3 sind mehrere Warenstützen 2 einer nicht weiter dargestellten Warenaufnahme 1 gezeigt, die zur horizontal gestapelten Einlagerung von Lagergut übereinander an einem gemeinsamen, hier durch die Linie L schematisch angedeuteten Stützenträger verschwenkbar gehalten sind. Die Warenstützen 2 sind jeweils über zwei etwa parallel übereinander angeordnete Schwenkarme 3, 4 mit dem ihnen zugeordneten Stützenträger verbunden, wobei die dazu vorgesehenen und als achsparallele Schwenkachsen 5, 6 ausgebildeten Gelenkstellen der Schwenkarme 3,4 sowohl am Stützenträger wie auch an der entsprechenden Warenstütze 2 seitlich oder in Schwenkrichtung versetzt zueinander angeordnet sind. Dabei ist der Versatz dieser Gelenkstellen 5 und 5' beziehungsweise 6 und 6' so gewählt, daß durch ein Verschwenken der Schwenkarme 3, 4 die mit ihnen jeweils verbundene Warenstütze 2 relativ zu diesen Schwenkarmen 3, 4 bewegbar ist. Somit bewegen sich die zwischen den beiden Schwenkarmen 3, 4 und der mit ihnen verschwenkbar verbundenen Warenstütze 2 vorgesehenen Gelenkstellen 5, 5' beim Verschwenken der Schwenkarme 3, 4 zwar in parallelen Ebenen aber doch jeweils auf kreisbogenförmigen Bewegungslinien, die jeweils einen unterschiedlichen Drehmittelpunkt aufweisen. Durch Überlagerung dieser Bewegungen wird auch die Warenstütze 2 relativ zu den Schwenkarmen 3, 4 etwa parallel zu deren Schwenkebene verdreht. Selbstverständlich können die Schwenkarme 3, 4 jeweils auch als Doppelarme mit zwei parallel angeordneten Armteilen ausgebildet sein, wenn beispielsweise größere Warenstützen 2 zu halten sind.

Die Warenstützen 2 sind aus einer außerhalb des Zufuhrweges der Waren angeordneten Ruhestellung in eine innerhalb des Zufuhrweges liegende Bereitschaftsstellung verschwenkbar. Durch Belastung der jeweils in Bereitschaftsstellung befindlichen Warenstütze in der parallel zu den Stützträgern verlaufenden Zufuhrrichtung Pf1 mittels der einzulagernden Ware kann jede der Warenstützen aus ihrer Bereitschaftsstellung in ihre Haltestellung verschwenkt werden. Dabei wird die zur Zufuhr- oder Entnahmeseite A hin jeweils nächstobere Warenstütze 2 beim Verschwenken der unter ihr angeordneten Warenstütze 2 in deren Haltestellung mittels einer Mitnahmevorrichtung aus ihrer Ruhestellung in ihre Bereitschaftsstellung gebracht, so daß stets oberhalb der zur Zufuhrseite A hin mit einer Ware bereits belegten Warenstütze 2 eines Stützenträgers sich die benachbarte, noch freie Warenstütze 2 in ihrer Bereitschaftsstellung befindet.

Aus Fig. 1 ist erkennbar, daß nur bei der der Zufuhr- oder Entnahmeseite A entferntesten Warenstütze 2 die Ruhestellung stets der Bereitschaftsstellung entspricht. Hierzu ist ein Festanschlag 7 vorgesehen, der diese Warenstütze 2 und ihre Schwenkarme 3, 4 in einer der Ruhe- beziehungsweise Bereitschaftsstellung entsprechenden Endstellung ihres Schwenkweges beaufschlagt.

Die andere Endstellung dieser, in den Figuren 1 bis 3 untersten Warenstütze 2, die ihrer Haltestellung entspricht, ist durch einen weiteren Festanschlag 8 festgelegt, der die Warenstütze 2 in dieser Position auf ihrer Rück- oder Unterseite beaufschlagt.

In Fig. 2 sind die beiden untersten, in ihren Haltestellungen befindlichen Warenstützen 2 mit Warenstücken 9 belegt, während die gegenüber diesen Warenstützen 2 zur Zufuhr- oder Entnahmeseite A hin nächstobere Warenstütze 2 in sich ihrer Bereitschaftsstellung befindet. Diese nächstobere Warenstütze 2 wird durch ein in Zufuhrrichtung Pf1 in die Warenaufnahme 1 gerade eingelegtes Warenstück 9 beaufschlagt, das allein schon durch sein Eigengewicht diese nächstobere Warenstütze 2 ebenfalls in deren Haltestellung verschwenken soll. Zu erkennen ist, daß jede der Warenstützen 2 jeweils an ihrem zur Zufuhr- oder Entnahmeseite A hin vorderen oder oberen Schwenkarm 3 einen senkrecht zur Schwenkebene der Schwenkarme 3, 4 angeordneten Mitnehmer 10 hat, der bei einer Schwenkbewegung dieser Warenstütze 2 in ihre Haltestellung - wie Fig. 2 zeigt - den unteren der beiden Schwenkarme 3, 4 der zur Zufuhr- oder Entnahmeseite A hin jeweils darüber angeordneten Warenstütze 2 beaufschlagt und diese Warenstütze 2 somit aus ihrer Ruhestellung in ihre Bereitschaftsstellung bewegt.

Aus Fig. 2 ist auch erkennbar, daß vorzugsweise beidseits der Warenstützen 2 jeweils eine etwa parallel zu deren Schwenkebene und in Zufuhrrichtung Pf1 angeordnete Führungsschiene 11 für das Stapelgut vorgesehen sein kann, die als Einlegehilfe das Einlagern des Stapelgutes in die Warenaufnahme 1 erleichtert.

In den Figuren 1 bis 3 sind die dem gemeinsamen Stützenträger L zugeordneten Warenstützen 2 jeweils als Niederhalter für die in Zufuhrrichtung Pf1 unter ihnen angeordneten Warenstützen ausgebildet. Die Unterseite dieser Warenstützen 2 ist dazu als Niederhalter-Anschlag 12 ausgestaltet, der in Haltestellung dieser Warenstütze 2 das Warenstück 9 bereichsweise beaufschlagt, daß auf der jeweils darunter angeordneten Warenstütze 2 abgelegt ist. Bei vollständig belegter Warenaufnahme 1 kann die hier lediglich als Niederhalter dienende, zur Zufuhrseite A hin oberste Warenstütze 2 in ihrer Haltestellung mittels eines in Pfeilrichtung Pf2 schwenkbaren Sperr-Riegels oder Verriegelungsarmes 13 verriegelt werden, so daß alle eingelagerten Warenstücke 9 sicher und fest in der Warenaufnahme 1 gehalten sind. Dabei ist als besonderer Vorteil hervorzuheben, daß in dieser fixierten Lage die Schwenkmechanik der Warenstützen praktisch unbelastet ist und das Gewicht der Warenstücke 9 über die jeweils als Niederhalter ausgebildeten Warenstützen 2 auf den Festanschlag 8 geleitet wird.

Die Warenstützen 2 können aber auch so ausgebildet sein, daß sie mit ihrem Niederhalter-Anschlag 12 zusätzlich oder ausschließlich die in Zufuhrrichtung Pf1 jeweils unter ihnen angeordnete Warenstütze 2 beaufschlagen. Dies kann bei druckempfindlichen Warenstücken 9 vorteilhaft sein, die nur wenig oder überhaupt nicht von einem Niederhalter-Anschlag beaufschlagt werden dürfen. Hier können die Warenstücke auch in dem Zwischenraum locker gehalten werden, der zwischen den sich in ihrer Haltestellung gegenseitig fixierenden Warenstützen 2 verbleibt. Vergleichbares läßt sich mit Warenstützen 2 erreichen, die auf ihrer der Zufuhr- oder Entnahmeseite A zugewandten Oberseite einen Abstandhalter hat, der die zur Zufuhrseite A hin davor oder darüber angeordnete Warenstütze 2 rückseitig beaufschlagt. Um die ohnehin schon gute teilespezifische Anpassungsfähigkeit der Warenaufnahme 1 noch zusätzlich zu begünstigen, kann es vorteilhaft sein, wenn die zum Abstützen der Ware an der Warenstütze 2 jeweils vorgesehene Stützfläche 14 gegenüber der Warenstütze 2 und/oder gegenüber dem Niederhalter-Anschlag 12 aus unterschiedlichem Material besteht. Somit kann die Stützfläche 14 jeder Warenstütze 2 eine harte Oberfläche aufweisen, während beispielsweise der Niederhalter-Anschlag 12 aus einem weichen, vorzugsweise aus einem elastomeren Material besteht.

In den Figuren 1 bis 3 wird die Schwenkbewegung der einzelnen Warenstützen 2 in der Haltestellung durch die in Zufuhrrichtung Pf1 jeweils darunter angeordnete Warenstütze 2 sowie den Festanschlag 8 begrenzt. Möglich ist aber auch, diese Haltestellung der einzelnen Warenstützen durch die Anordnung der Gelenkstellen ihrer Schwenkarme 3, 4 derart festzulegen, daß einer ihrer Schwenkarme 3, 4, vorzugsweise der obere Schwenkarm 3, eine weitergehende Schwenkbewegung des anderen Schwenkarmes 4 in einer "Totpunktstellung" blockiert. Ebenso gut können entsprechende Abstandshalter an den Schwenkarmen 3, 4 oder Schwenkwegbegrenzungen an den Gelenkstellen 5 und/oder 6 vorgesehen werden. Bei all diesen Ausführungsformen wird jedoch darauf verzichtet, daß Eigengewicht der eingelagerten Warenstücke 9 ohne Belastung der Schwenkmechanik der Warenstützen 2 direkt zum Festanschlag 8 zu leiten.

In den Figuren 1 bis 4 ist jeder Warenstütze 2 eine Rückstellkraft zugeordnet, die bei Entlastung dieser Warenstütze 2 die mit ihr verbundenen Schwenkarme 3, 4 in deren Bereitschaftsstellung und anschließend in deren Ruhestellung einschwenkt. Diese Rückstellkraft ist hier als Schenkelfeder 15 ausgebildet, die sich mit ihren Schenkeln 16 einerseits an dem am oberen Schwenkarm 3 dieser Warenstütze 2 vorgesehenen Mitnehmer und andererseits an der Schwenkachse 6' des unteren Schwenkarmes 4 abstützt. Dabei wird der runde Federkern 14 dieser Schenkelfeder 15 von der Schwenkachse 6 des oberen Schwenkarmes 3 durchsetzt.

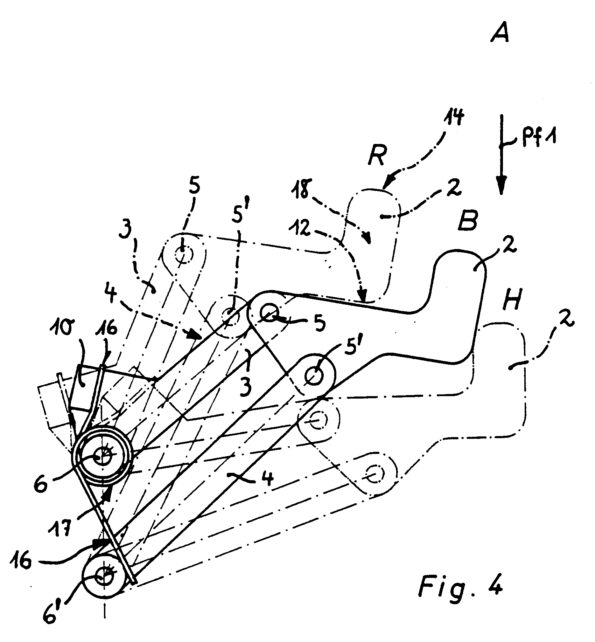

In Fig. 4 ist eine einzelne Warenstütze 2 der in den Figuren 1 bis 3 dargestellten Warenaufnahme 1 in drei Bewegungsbildern gezeigt, wobei die obere strichpunktierte Position der Warenstütze 2 deren Ruhestellung R und die in Fig. 1 untere strichpunktiert dargestellte Position die Haltestellung H der Warenstütze 2 darstellt. Dagegen ist die Bereitschaftsstellung B der Warenstütze 2 in durchgezogenen Linien gezeichnet. Deutlich zu erkennen ist, daß sich bei einer Schwenkbewegung der Schwenkarme 3, 4 die Warenstütze 2 relativ zu diesen Schwenkarmen 3, 4 bewegt und stets in einer etwa horizontalen Position verbleibt. Diese Relativbewegung der Warenstütze 2 gegenüber ihren Schwenkarmen 3, 4 wird durch den Versatz der Gelenkstellen 5 und 5' beziehungsweise 6 und 6' bewirkt, der zu überlagerten Bewegungen der Schwenkarme 3, 4 und ihrer Warenstütze 2 führt. Die Warenstütze 2 kann somit aus einer vergleichsweise kompakten Ruhestellung R in eine weit in den Zufuhrweg der Warenstücke 9 reichende Haltestellung H verschwenkt werden. Dabei wird die Schwenkbewegung aus der Ruhestellung R in die Bereitschaftsstellung durch den Mitnehmer 1o der zuvor bestückten, in Fig. 4 jedoch nicht dargestellten Warenstütze 2 ausgeführt, währenddessen diese zuvor bestückte Warenstütze 2 aus ihrer Bereitschaftsstellung B in ihre Haltestellung H verschwenkt. Die Bewegung von der Bereitschaftsstellung B in die Haltestellung H erfolgt durch das Einlegen des Stapelgutes, insbesondere durch dessen Gewichtskraft oder die Einlagerungsbewegung der Warenstücke 9 selbst. Mit dieser Schwenkbewegung einer Warenstütze 2 von ihrer Bereitschaftsstellung B in ihrer Haltestellung H wird gleichzeitig mittels der durch die Mitnehmer 1o gebildeten Mitnahmevorrichtung die zur Zufuhr- oder Entnahmeseite A hin darüber oder davor angeordnete Warenstütze 2 aus der Ruhestellung R in die Bereitschaftsstellung B gebracht.

Die Warenaufnahme 1 gestattet sowohl eine horizontale, d.h. übereinander gestapelte Anordnung der Warenstücke 9 wie auch eine vertikale, d.h. aneinander gereihte Lagerung dieser Waren. Dabei begünstigt die hier als Schenkelfeder 15 ausgebildete Rückstellkraft der Warenstützen 2 die lageunabhängige Einlagerung der Warenstücke 9 in die Warenaufnahme 1, die sowohl automatisch wie auch manuell erfolgen kann.

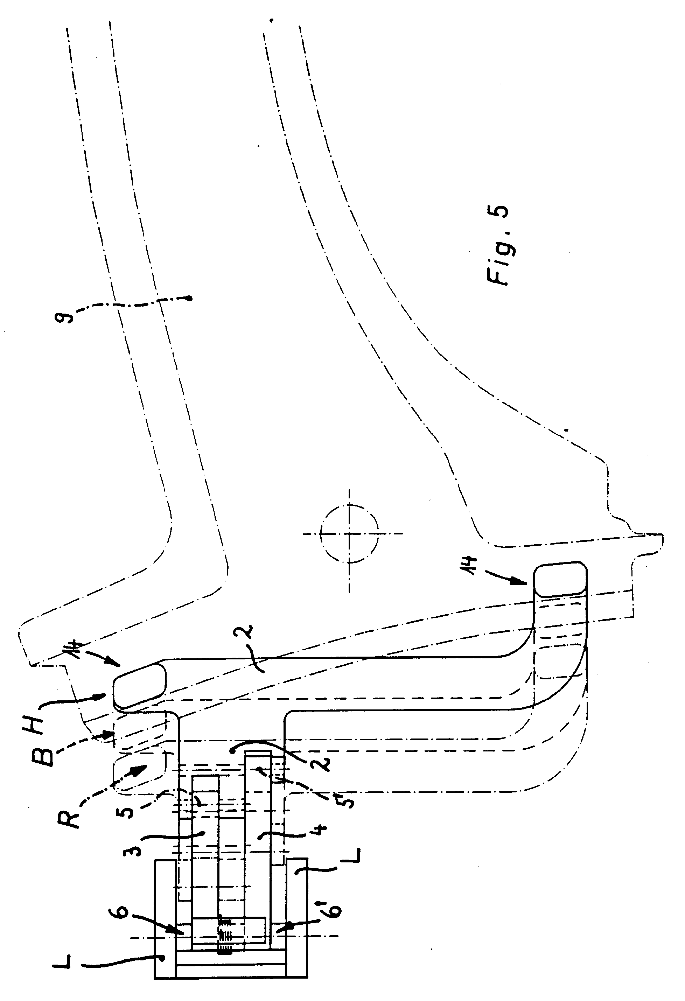

Aus Figur 5 ist die gute Anpassungsfähigkeit der Warenstützen 2 an teilespezifische Besonderheiten deutlich erkennbar. Figur 5 zeigt eine stegförmige Warenstütze 2, die an ihren Stützflächen 14 an das nur strichpunktiert angedeutete Warenstück 9 formangepaßt ist. Zur Abstützung des Warenstückes 9 an festgelegten Auflagenpunkten kann es zweckmäßig sein, wenn diese Stützflächen an zumindest einem zur Zufuhr- oder Entnahmeseite A weisenden Vorsprung 18 der Warenstützen 2 vorgesehen ist, wie dies aus den Figuren 1 bis 4 deutlich wird. Um sich in ihren Schwenkbewegungen nicht gegenseitig zu behindern, sind die Gelenkstellen 5, 5' der in Fig. 5 dargestellten Schwenkarme 3, 4 auf gegenüberliegenden Seitenflächen dieser Warenstütze 2 angeordnet, so daß sich die Schwenkarme 3, 4 auf voneinander beabstandeten parallelen Schwenkebenen bewegen.

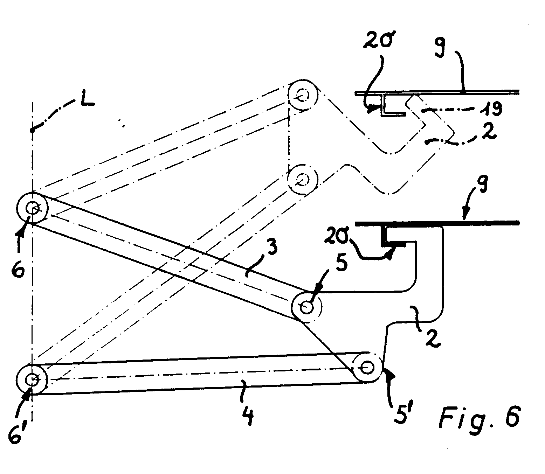

Aus Fig. 6 wird deutlich, daß durch die gewählte Armlänge der Schwenkarme 3, 4 auch die Relativbewegung der Warenstütze 2 gegenüber diesen Schwenkarmen 3, 4 gesteuert werden kann. In Fig. 6 weist der obere Schwenkarm 3 eine gegenüber dem unteren Schwenkarm 4 kürzere Armlänge auf. Die Schwenkbewegungen dieser Schwenkarme 3, 4 überlagern sich infolgedessen so, daß die Warenstütze 2 beim Verschwenken in die Haltestellung parallel zu den Schwenkebenen eine Drehbewegung entgegen dem Uhrzeigersinn durchführt. Dabei greift diese Warenstütze mit einem etwa L-förmigen Haltevorsprung 19 in eine entsprechende Hinterschneidung oder Ausformung 20 des Warenstückes 9 ein.

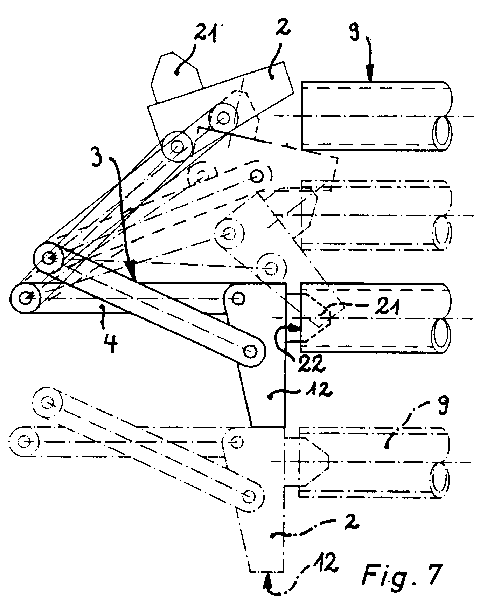

Durch eine überkreuzte Anordnung der Schwenkarme 3, 4 kann die Warenstütze 2 parallel zu den Schwenkebenen der Schwenkarme 3, 4 derart verdreht werden, daß sie - wie dies in Fig. 7 dargestellt ist - mit einem warenseitig vorgesehenen, stiftförmigen Haltevorsprung 21 beim Verschwenken aus der Bereitschaftsstellung in ihre Haltestellung in die stirnseitige Rohröffnung 22 eines hier hülsenförmigen Warenstückes 9 eingreift. Auch die überkreuzt angeordneten Schwenkarme 3, 4 der in Fig. 7 dargestellten Warenstütze 2 sind an ihrer einen Armseite mit dem hier nicht weiter dargestellten Stützenträger und an ihrer gegenüberliegenden Armseite mit der Warenstütze 2 jeweils verschwenkbar verbunden. Dabei sind die einerseits am Stützenträger und andererseits an der Warenstütze 2 vorgesehenen Gelenkstellen 5, 6 der Schwenkarme 3, 4 in den parallelen Schwenkebenen jeweils versetzt zueinander am Stützenträger und an der entsprechenden Warenstütze 2 angeordnet.

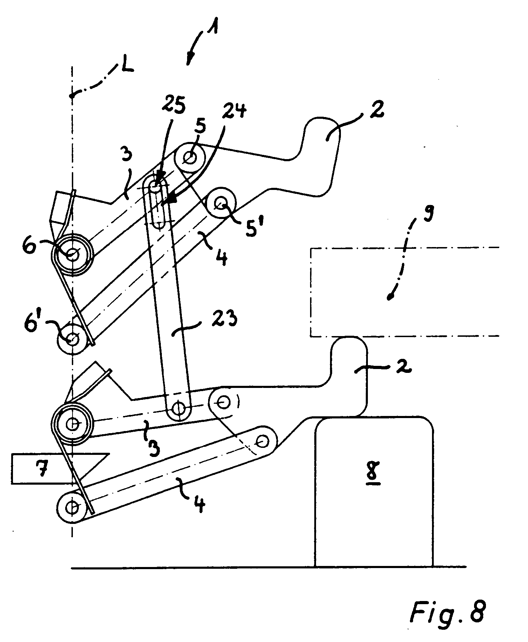

In Fig. 8 sind zwei benachbarte Warenstützen 2 einer Warenaufnahme 1 dargestellt, die über einen Verbindungsarm 23 miteinander verbunden sind. Der Verbindungsarm 23 verbindet den oberen Schwenkarm 3 der in Fig. 8 unteren Warenstütze 2 mit dem oberen Schwenkarm 3 der darüber angeordneten Warenstütze 2. Dabei greift der Verbindungsarm 23 an dem ihm zugeordneten Schwenkarmen 3, 4 gelenkig an, wobei die Gelenkstelle dieses Verbindungsarmes 23 an der in Fig. 8 oberen Warenstütze 2 als Langloch 24 ausgebildet ist. In diesem Langloch 24 ist ein Mitnehmer 25 verschieblich geführt, der beim Verschwenken der unteren Warenstütze 2 in einer Endstellung des Langloches 24 angeordnet ist. Das Langloch einer solchen Mitnahmevorrichtung erlaubt es also, daß sich die obere Warenstütze 2 in ihrer Ruhestellung befindet, während die untere Warenstütze 2 in ihrer Bereitschaftsstellung gehalten ist. Beim Verschwenken der unteren Warenstütze aus ihrer Bereitschaftsstellung in ihre Haltestellung jedoch wird über den dabei in einer Endstellung des Langloches 24 befindlichen Mitnehmer 25 auch die obere Warenstütze 2 in ihre Bereitschaftsstellung verschwenkt. Bei einer solchen Mitnahmevorrichtung, bei der die jeweils benachbarten Warenstützen 2 über einen derartigen Verbindungsarm 23 miteinander verbunden sind, kann auch ein vergleichsweise großer Abstand der benachbarten Warenstützen gewählt werden, so daß in der entsprechenden Warenaufnahme 1 auch vergleichsweise dicke Warenstücke 9 eingelagert werden können.

Zwar ist es auch möglich, eine Kopplung der benachbarten Warenstützen 2 beispielsweise durch ein Verbindungsband aus flexiblem Material zu erreichen, daß beim Verschwenken der jeweils unteren Warenstütze 2 in ihre Haltestellung gespannt ist, jedoch begünstigen die hier dargestellten Mitnahmevorrichtungen eine komplikationslose Beweglichkeit der Schwenkmechanik der Warenstützen 2.

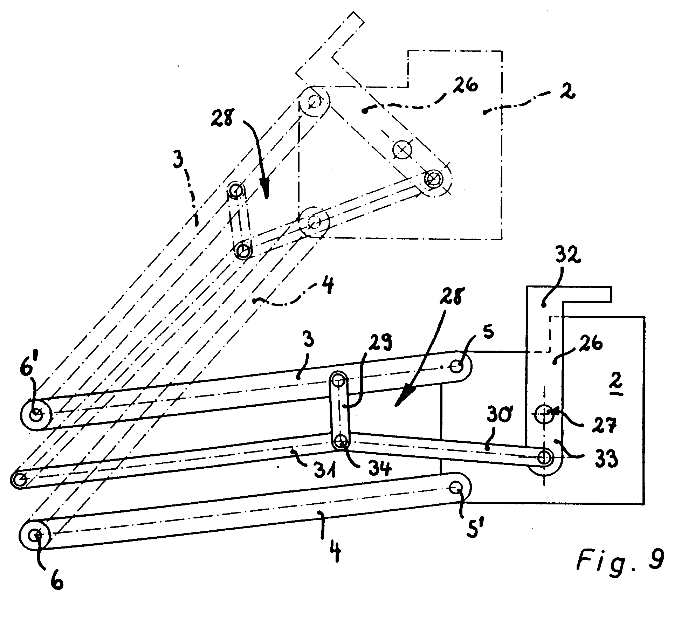

In Fig. 9 ist eine gegenüber den Fig. 1 bis 8 abgewandelte Warenstütze 2 dargestellt, an der ein Hilfsbügel 26 an einer Gelenkstelle 27 verschwenkbar angreift. Dieser Hilfsbügel 26 ist mit einem Drehgetriebe 28 verbunden, welches die Relativbewegung der Warenstütze 2 gegenüber den ihr zugeordneten Schwenkarmen 3, 4 in eine Relativbewegung des Hilfsbügels 26 gegenüber dieser Warenstütze 2 umsetzt. Dieses Drehgetriebe 28 besteht in Fig. 9 aus drei Koppelgliedern 29, 3o und 31. Die Gelenkstelle 27 des Hilfsbügels 26 unterteilt diesen in einen mit der Warenstütze 2 zusammenwirkenden etwa L-förmig ausgebildeten Halteteil 32 sowie ein Kopplungsteil 33. Über die Koppelglieder 3o, 31 ist der Hilfsbügel 36 mit seinem Kopplungsteil 33 mit dem in Fig. 9 nicht weiter dargestellten Stützenträger verbunden, wobei die Gelenkstelle 34 zwischen den Koppelgliedern 3o, 31 über das Koppelglied 29 mit dem oberen Schwenkarm 3 der in Fig. 9 dargestellten Warenstütze 2 verbunden ist. Auch der Hilfsbügel 26 kann somit durch eine Überlagerung der verschiedenen Schwenkbewegungen etwa parallel zu den Schwenkebenen der Schwenkarme 3, 4 relativ zur Warenstütze 2 bewegt werden.

Durch entsprechende Ausbildung des über das Drehgetriebe 28 verschwenkbaren Hilfsbügels 26 können neben dem Verschwenken der Warenstützen 2 noch weitere Bewegungen während des Einlagerns der Warenstücke 9 ausgeführt werden, zum Beispiel Niederhalter einschwenken, Greifer öffnen oder schließen, Zentrierhilfen wegschwenken, Dämpfungszwischenlagen an gefährdeten Bereichen anbringen usw. Bei der in Fig. 9 dargestellten Ausführungsform wird das Warenstück zwischen der Warenstütze 2 und dem Hilfsbügel 26 verspannt, sodaß eventuell auch ein Stützenträger zur Warenaufnahme ausreichen kann. Ansonsten ist eine Warenaufnahme zu bevorzugen, die zumindest zwei Stützenträger aufweist, deren Warenstützen das Lagergut an verschiedenen Eckbereichen erfassen und abstützen kann.

Die erfindungsgemäße Warenaufnahme bildet somit ein flexibles Stapelsystem für Transport, Verpackung und Lagerung von Halb- und Fertigteilen sowie von anderen Warenstücken. Dabei ist das hier dargestellte Warenaufnahme-System in Transport-, Verpakkungs- und Lagerbehältern sowie in Regalsystemen einsetzbar und kann zur horizontalen und vertikalen Einlagerung entsprechenden Lagergutes verwendet werden. Die Be- und Entladung der hier dargestellten Warenaufnahmen kann sowohl automatisch sowie manuell erfolgen. Durch Einlegen des Stapelgutes insbesondere in die in Fig. 1 bis 4 dargestellten Warenaufnahmen 1 wird automatisch das zuvor eingelegte Warenstück in seiner Lage fixiert, arretiert und gleichzeitig eine Zwischenlage mit Aufnahme für das nächstfolgende Lagergut eingeschwenkt. Dabei dient jede der Warenstützen 2 sowohl als Stützfläche für das einzulagernde Warenstück wie auch als Zwischenlage für das nächstfolgende Lagergut. Durch Verriegeln der obersten Warenstütze 2 sowie ihrer Schwenkarme 3, 4 wird das gesamte Packgut arretiert. Bei der Entnahme schwenken die jeweils nicht mehr benötigten Warenstützen aus dem Zufuhrweg automatisch zurück, so daß eine ungehinderte Entnahme oder erneute Beladung erfolgen kann. Zur Vorpositionierung des Lagergutes können - wie beispielsweise in Fig. 2 dargestellt ist - teilespezifische Einführhilfen oder Führungsschienen eingesetzt werden. Die hier dargestellten Warenaufnahmen haben folgende Vorteile:
- Geeignet für manuelle Be- und Entladung;
- lageunabhängige Einlagerung der Warenstücke von horizontal bis vertikal;
- universelle Verwendbarkeit für Transport- und Lagergut unterschiedlichster Größe, Form, Material, Oberflächenbeschaffenheit, Empfindlichkeit und Gewicht;
- teilespezifische Gestaltungsmöglichkeit bezüglich Kontur, Werkstoff, Oberflächenbeschaffenheit sowie in großem Bereich variable Größenauslegung der Stützflächen und Zwischenlagen;
- automatisch ein- und ausschwenkende Warenstütze dienen gleichzeitig als Aufnahme, Niederhalter, Distanzhalter und Befestigungselement. Je nach Werkstoffauslegung bieten sie zusätzlich noch Dämpfung und Teileschutz;
- die Stapelteilung ist weitgehend unabhängig von Materialstärke und Kontur des Packgutes;
- die Eindringtiefe der eventuell auch als Zwischenlagen dienenden Warenstützen in den Zufuhrweg ist in großem Bereich variabel;
- keine mechanische Belastung der Schwenkmechanik der Warenstützen in verriegeltem Zustand durch das Eigengewicht des Packgutes. Bei einer Doppelfunktion der Warenstützen als Stützfläche und Niederhalter wirken die Kräfte praktisch allein auf den Festanschlag 8.

Somit entfällt bei der hier dargestellten Warenaufnahme ein manuelles Ein- und Ausschwenken der Warenstützen. Auch auf ein Einbringen und Entnehmen von separaten Zwischenlagen, Distanzstücken oder anderen Dämpfungsmaterialien kann verzichtet werden, was durch die Einsparung zusätzlicher Packmittel und Packhilfsstoffe eine nicht unerhebliche Kostenersparnis bedeuten kann. Darüber hinaus kann bei entsprechender Ausgestaltung der Warenaufnahme 1 auch ein separates Ver- und Entriegeln der einzelnen Warenstützen 2 entfallen.

## Patentansprüche

1. Warenaufnahme zur gestapelten oder aneinandergereihten Lagerung von Waren, die zumindest einen Stützenträger (L) aufweist, an dem mehrere, in dessen Längsrichtung benachbarte Warenstützen (2) schwenkbar gehalten sind, welche aus einer trägernahen Ruhestellung gegenüber dem Stützenträger (L) in eine im Zufuhrweg der Ware (9) angeordnete Bereitschaftsstellung und von der Bereitschaftsstellung in eine Haltestellung ausschwenkbar sind, wobei beim Verschwenken einer Warenstütze (2) in deren Halterung die ihr benachbarte Warenstütze (2) mittels einer Mitnahmevorrichtung (10) aus ihrer Ruhestellung in ihre Bereitschaftsstellung bringbar ist, **dadurch gekennzeichnet**, daß die Warenstützen (2) jeweils über zumindest zwei Schwenkarme (3, 4) mit dem ihnen zugeordneten Stützenträger (L) verbunden sind, daß die Schwenkarme (3, 4) sowohl am Stützenträger (L) als auch an der entsprechenden Warenstütze (2) schwenkbar angelenkt sind, daß die Schwenkachsen der Schwenkarme am Stützenträger (L) und an der Warenstütze (2) jeweils zueinander versetzt sind und daß durch ein Verschwenken der Schwenkarme (3, 4) die Winkellage der mit ihnen jeweils verbundenen Warenstütze (2) relativ zu diesen Schwenkarmen in vorgegebener Weise veränderbar ist.

2. Warenaufnahme nach Anspruch 1, dadurch gekennzeichnet, daß jeder Warenstütze (2) ein Schwenkarm-Paar aus zwei Schwenkarmen (3, 4) zugeordnet ist, die an ihrer einen Armseite mit dem Stützenträger (L) und an ihrer gegenüberliegenden Armseite mit der Warenstütze (2) jeweils derart verschwenkbar verbunden sind, daß sie ein Gelenkviereck bilden.

3. Warenaufnahme nach Anspruch 1 oder 2, dadurch gekennzeichnet, daß die einer Warenstütze (2) zugeordneten und an versetzt zueinander angeordneten Gelenkstellen mit der Warenstütze (2) und dem Stützenträger (L) verbundenen Schwenkarme (3, 4) in ihrer Längserstreckung neben- oder übereinander oder über Kreuz angeordnet sind.

4. Warenaufnahme nach einem der Ansprüche 1 bis 3, dadurch gekennzeichnet, daß die am Stützenträger (L) und/oder die an den Warenstützen (2) vorgesehenen Schwenkachsen der Schwenkarme (3, 4) als etwa parallele Schwenkbolzen (5, 6) ausgebildet sind.

5. Warenaufnahme nach einem der Ansprüche 1 bis 4, dadurch gekennzeichnet, daß die Schwenkachsen (6) oder dergleichen Gelenkstellen aller einem Stützenträger (L) zugeordneter Warenstützen (2) an diesem in etwa einer Linie angeordnet sind.

6. Warenaufnahme nach einem der Ansprüche 1 bis 5, dadurch gekennzeichnet, daß die einander unmittelbar benachbarten Schwenkarme benachbarter Warenstützen (2) eine gemeinsame Schwenkachse am Stützenträger (L) haben.

7. Warenaufnahme nach einem der Ansprüche 1 bis 6, dadurch gekennzeichnet, daß zur Steuerung der Relativbewegung einer Warenstütze (2) die an ihr an unterschiedlichen Gelenkstellen angreifenden Schwenkarme (3, 4) unterschiedliche Längen aufweisen.

8. Warenaufnahme nach einem der Ansprüche 1 bis 7, dadurch gekennzeichnet, daß sich die Schwenkarme (3, 4) auf voneinander beabstandeten parallelen Schwenkebenen bewegen.

9. Warenaufnahme nach einem der Ansprüche 1 bis 8, dadurch gekennzeichnet, daß jede Warenstütze (2) gegen eine Rückstellkraft, insbesondere gegen eine Rückstellfeder in ihre Haltestellung bewegbar ist.

10. Warenaufnahme nach Anspruche 9, dadurch gekennzeichnet, daß die Rückstellfeder eine Schenkelfeder (15) ist.

11. Warenaufnahme nach einem der Ansprüche 1 bis 10, dadurch gekennzeichnet, daß jeweils zwei benachbarte Warenstützen und/oder ihre Schwenkarme mittels zumindest einem Zugelement miteinander verbunden sind, welche(s) beim Verschwenken der einen Warenstütze von ihrer Bereitsschaftsstellung (B) in ihre Haltestellung die andere Warenstütze (2) aus ihrer Ruhestellung (R) in ihre Bereitschaftsstellung (B) bewegt.

12. Warenaufnahme nach einem der Ansprüche 1 bis 11, dadurch gekennzeichnet, daß jeweils an dem zur Zufuhr- oder Entnahmeseite (A) hin vorderen oder oberen Schwenkarm (3) einer Warenstütze (2) ein Mitnehmer (1o) vorgesehen ist, der bei einer Schwenkbewegung dieser Warenstütze (2) in ihre Haltestellung (H) den unteren oder hinteren Schwenkarm (4) der zur Zufuhr- oder Entnahmeseite (A) hin jeweils darüber oder davor angeordneten Warenstütze (2) beaufschlagt.

13. Warenaufnahme nach einem der Ansprüche 1 bis 11. dadurch gekennzeichnet, daß ein Schwenkarm einer Warenstütze (2) mit einem Schwenkarm der zur Zufuhr- oder Entnahmeseite (A) jeweils davor oder darüber angeordneten Warenstütze (2) mittels eines Verbindungsarmes (23) verbunden ist, daß jeder Verbindungsarm (23) an den ihm zugeordneten Schwenkarmen gelenkig angreift, daß die Gelenkstelle dieser Verbindungsarme (23) an dieser jeweils davor oder darüber angeordneten Warenstütze (2) als Langloch (24) ausgebildet ist, in der ein Mitnehmer (25) verschieblich geführt ist und daß dieser Mitnehmer (25) beim Verschwenken der jeweils unteren oder hinteren Warenstütze (2) in ihre Haltestellung in einer Endstellung des Langloches (24) angeordnet ist.

14. Warenaufnahme nach einem der Ansprüche 1 bis 13, dadurch gekennzeichnet, daß an den Warenstützen (2) jeweils zumindest ein Hilfsbügel (26) vorgesehen ist, der an einer Gelenkstelle (27) verschwenkbar an der Warenstütze (2) angreift und daß der (die) Hilfsbügel (26) mit einem vorzugsweise aus zumindest einem Koppelglied bestehenden Getriebe (28) verbunden ist (sind), welches die Relativbewegung der Warenstütze (2) gegenüber den ihr zugeordneten Schwenkarmen (3, 4) in eine Relativbewegung des Hilfsbügels (der Hilfsbügel) (26) gegenüber dieser Warenstütze (2) umsetzt.

15. Warenaufnahme nach einem der Ansprüche 1 bis 14, dadurch gekennzeichnet, daß die einem Stützenträger zugeordneten Warenstützen (2) jeweils als Niederhalter für die in Zufuhrrichtung hinter oder unter ihr angeordneten Warenstützen (2) ausgebildet sind und daß die Warenstützen (2) einen Niederhalter-Anschlag (12) aufweisen, der in Haltestellung dieser Warenstütze (2) die in Zufuhrrichtung jeweils dahinter oder darunter angeordnete Warenstütze (2) und/oder die von dieser Warenstütze (2) abgestützte Ware bereichsweise beaufschlagt.

16. Warenaufnahme nach einem der Ansprüche 1 bis 15, dadurch gekennzeichnet, daß jede Warenstütze (2) zum Abstützen der Ware eine Stützfläche (14) hat, die vorzugsweise an den die Stützfläche (14) beaufschlagenden Bereich der Ware formangepaßt ist.

17. Warenaufnahme nach einem der Ansprüche 1 bis 16, dadurch gekennzeichnet, daß die Stützfläche (14) gegenüber der Warenstütze (2) und/oder gegenüber dem Niederhalter-Anschlag (12) aus unterschiedlichem Material besteht.

18. Warenaufnahme nach einem der Ansprüche 1 bis 17, dadurch gekennzeichnet, daß die Stützfläche (14) an zumindest einem zur Zufuhr- oder Entnahmeseite (A) weisenden Vorsprung der Warenstütze (2) vorgesehen ist.

19. Warenaufnahme nach einem der Ansprüche 1 bis 18, dadurch gekennzeichnet, daß die zur Zufuhr- oder Entnahmeseite (A) hin oberste oder vorderste Warenstütze (2) eines Stützenträgers (L) in ihrer Haltestellung verriegelbar ist.

## Claims

1. Goods receptacle for the stacked storage of goods or their storage placed one against the other in rows, which receptacle displays at least one support carrier (L), at which several goods supports (2) are retained to be pivotable, which supports are adjacent in its longitudinal direction and are pivotable relative to the support carrier (L) out of a rest position near to the carrier into a position of readiness arranged in the feed path of the goods (9) and from the position of readiness into a retaining position, wherein - on the pivotation of a goods support (2) in its mounting - the goods support (2) adjacent thereto is bringable out of its rest position into its position of readiness by means of an entraining device (10), characterised thereby, that the goods support (2) are each connected by way of at least two respective pivot arms (3, 4) with the support carrier (L) associated with them, that the pivot arms (3, 4) are articulated to be pivotable at the support carrier (L) as well as also at the corresponding goods support (2), that the pivot axles of the pivot arms at the support carrier (L) and at the goods support (2) are each displaced relative to the other and that - by a pivotation of the pivot arms (3, 4) - the angular position of the goods support (2) respectively connected with them is variable in preset manner relative to these pivot arms.

2. Goods receptacle according to claim 1, characterised thereby, that each goods support (2) is associated with a respective pivot arm pair of two pivot arms (3, 4), which are connected at their one arm end with the support carrier (L) and at their opposite arm end with the goods support (2) each time to be pivotable in such a manner that they form a four-bar joint.

3. Goods receptacle according to claim 1 or 2, characterised thereby, that the pivot arms (3, 4), which are associated with one goods support (2) and connected with the goods support (2) and the support carrier (L) at joints arranged each displaced relative to the other, are arranged one beside or one above the other or crossed over in their longitudinal extent.

4. Goods receptacle according to one of the claims 1 to 3, characterised thereby, that the pivot axles, which are provided at the support carrier (L) and/or at the goods supports (2), of the pivot arms (3, 4) are formed as approximately parallel pivot pins (5, 6).

5. Goods receptacle according to one of the claims 1 to 4, characterised thereby, that the pivot axles (6) or the like joints of all goods supports (2) associated with one support carrier (L) are arranged approximately in line thereat.

6. Goods receptacle according to one of the claims 1 to 6, characterised thereby, that the directly adjacent pivot arms of adjacent goods supports (2) have a common pivot axle at the support carrier (L).

7. Goods receptacle according to one of the claims 1 to 6, characterised thereby, that for the control of the relative movement of a goods support (2), the pivot arms (3, 4) engaging at different joints thereat display different lengths.

8. Goods receptacle according to one of the claims 1 to 7, characterised thereby, that the pivot arms (3, 4) move on parallel pivot planes spaced one apart from the other.

9. Goods receptacle according to one of the claims 1 to 8, characterised thereby, that each goods support (2) is movable in its retaining position against a restoring force, in particular against a restoring spring.

10. Gcods receptacle according to claim 9, characterised thereby, that the restoring spring is a lever spring (15).

11. Goods receptacle according to one of the claims 1 to 10, characterised thereby, that each two adjacent goods supports and/or their pivot arms are connected together by at least one tension element which on the pivotation of the one goods support from its position of readiness (B) into its retaining position moves the other goods support out of its rest position (R) into its position of readiness (B).

12. Goods receptacle according to one of the claims 1 to 11, characterised thereby, that an entraining member (10) is provided each time at that pivot arm (3) of a goods support (2), which is the forward or upper one towards the feed or withdrawal side (A), and - on a pivot movement of this goods support (2) into its retaining position (H) - acts on the lower or rear pivot arm (4) of the goods support (2), which is respectively arranged above or in front towards the feed or withdrawal side (A).

13. Goods receptacle according to one of the claims 1 to 11, characterised thereby, that a pivot arm of a goods support (2) is connected by means of a connect.ing arm (23) with a pivot arm of the goods support (2) respectively arranged in front thereof or thereover towards the feed or withdrawal side (A), that each connecting arm (23) engages articulatedly at the pivot arms associated therewith, that the joint of these connecting arms (23) at this goods support (2), which is respectively arranged in front thereof or thereover, is constructed as elongate hole (24), in which an entraining member (25) is guided to be displaceable and that this entraining member (25) is arranged in an end position of the elongate hole (24) on pivotation of the respective lower or further rearward goods support (2) into its retaining position.

14. Goods receptacle according to one of the claims 1 to 13, characterised thereby, that at least one auxiliary bracket (26) is respectively provided at each of the goods supports (2) and engages at the goods support (2) while being pivotable at a joint (27) and that the or each auxiliary bracket (26) is connected with a gear (28), which preferably consists of at least one coupling member and which translates the movement of the goods support (2) relative to the pivot arms (3, 4) associated therewith into a movement of the or each auxiliary bracket (26) relative to this goods support (2).

15. Goods receptacle according to one of the claims 1 to 14, characterised thereby, that the goods supports (2) associated with one support carrier are each time constructed as presser feet for the goods supports (2) arranged below it or behind it in the direction of feed and that the goods supports (2) have a presser foot abutment (12), which in the retaining position of this goods support (2) acts regionally on the goods support (2), which is respectively arranged thereunder or therebehind in direction of feed, and/or the article of goods supported by this goods support (2).

16. Goods receptacle according to one of the claims 1 to 15, characterised thereby, that each goods support (2) has a support surface (14) for the support of the article of goods, which surface is preferably adapted in shape to that region of the article, which acts on the support surface (14).

17. Goods receptacle according to one of the claims 1 to 16, characterised thereby, that the support surface (14) consists of a material differing from that of the goods support (2) and/or that of the presser foot abutment (12).

18. Goods receptacle according to one of the claims 1 to 17, characterised thereby, that the support surface (14) is provided at at least one projection, which points towards the feed or withdrawal side (A), of the goods support (2).

19. Goods receptacle according to one of the claims 1 to 18, characterised thereby, that the goods support (2), which is uppermost or foremost towards the feed or withdrawal side (A), of a support carrier (L) is latchable in its retaining position.

## Revendications

1. Dispositif de stockage pour emmagasiner des marchandises empilées ou placées les unes à côtés des autres, qui présente au moins un support d'appuis (L) auquel sont maintenus, de manière pivotante, plusieurs appuis de marchandise (2) voisins dans leur longueur longitudinale, appuis qui sont pivotants à partir d'une position de repos proche des supports, par rapport au support d'appui (L), dans une position de disponibilité disposée dans la trajectoire d'amenée de la marchandise (9) et d'une position de disponibilité dans une position de maintien, pendant le pivotement d'un appui de marchandises (2) dans sa fixation l'appui de marchandises (2) voisin pouvant être amené, au moyen d'un dispositif d'entraînement (10) de sa position de repos dans sa position de disponibilité, caractérisée en ce que les appuis de marchandises (2) sont reliés, chacun par au moins deux bras pivotants (3, 4), au support d'appuis (L) qui leur est associé, en ce que les bras pivotants (3, 4) sont articulés, aussi bien au support d'appui (L) qu'également à l'appui de marchandises (2) correspondant, en ce que les axes de pivot des bras pivotants du support d'appuis (L) et de l'appui de marchandises (2) sont décalés, à chaque fois, les uns par rapport aux autres et que, par pivotement des bras pivotants (3, 4), la position angulaire des appuis de marchandises (2) reliés à chacun d'entre eux peut être modifiée par rapport à ces bras pivotants de manière prédéterminée.

2. Dispositif de stockage selon la revendication 1, caractérisée en ce que chaque appui de marchandises (2) est associé à une paire de bras pivotant se composant de deux bras pivotants (3, 4) qui sont reliés, d'un côté de bras, au support d'appuis (L) et, du côté de bras opposé, à l'appui de marchandises (2), de manière pivotante de façon à former un quadrilatère articulé.

3. Dispositif de stockage selon la revendication 1 ou 2, caractérisée en ce que les bras pivotants (3, 4) qui sont reliés au support d'appui (L) et à l'appui de marchandises (2) aux points d'articulation décalés les uns par rapport aux autres et qui sont associés à un appui de marchandises (2), sont disposés dans leur étendue longitudinale les uns à côtés des autres, les uns au-dessus des autres ou en croix.

4. Dispositif de stockage selon l'une des revendications 1 à 3, caractérisée en ce que les axes de pivot prévus sur le support d'appuis (L) et/ou ceux prévus sur les appuis de marchandises (2) des bras pivotants (3, 4) sont conçus comme des boulons pivotants (5, 6) à peu près parallèles.

5. Dispositif de stockage selon l'une des revendications 1 à 4, caractérisée en ce que les axes de pivot (6) ou points d'articulation analogues de tous les appuis de marchandises (2) disposés sur un support d'appui (L) y sont disposés sensiblement sur une ligne.

6. Dispositif de stockage selon l'une des revendications 1 à 5, caracterisée en ce que les bras pivotants directement voisins les uns des autres d'appuis de marchandises (2) voisins présentent un axe de pivot commun sur le support d'appui (L).

7. Dispositif de stockage selon l'une des revendications 1 à 6, caractérisée en ce que pour la commande du mouvement relatif d'un appui de marchandises (2), les bras pivotants (3, 4), s'y engageant à des points d'articulation différents, présentent des longueurs différentes.

8. Dispositif de stockage selon l'une des revendications 1 à 7, caractérisée en ce que les bras pivotants (3, 4) se déplacent sur des plans de pivotement parallèles à distance les uns des autres.

9. Dispositif de stockage selon l'une des revendications 1 à 8, caractérisée en ce que chaque appui de marchandises (2) est amené dans sa position de maintien à l'encontre d'une force de rappel, en particulier à l'encontre d'un ressort de rappel.

10. Dispositif de stockage selon la revendication 9, caractérisée en ce que le ressort de rappel est un ressort à branches (15).

11. Dispositif de stockage selon l'une des revendications 1 à 10, caractérisée en ce qu'à chaque fois, deux appuis de marchandises voisins et/ou deux bras pivotants sont reliés au moins au moyen d'un élément de traction l'un à l'autre, moyens qui, au moment du pivotement d'un appui de marchandise de sa position de disponibilité (B) dans sa position de maintien, déplace l'autre appui de marchandises (2) de sa position de repos (R) dans sa position de disponibilité (B).

12. Dispositif de stockage selon l'une des revendications 1 à 11, caractérisée en ce qu'à chaque fois, il est prévu sur le bras pivotant (3) d'un appui de marchandises (2), supérieur ou avant dirigé vers le côté d'alimentation ou de prélèvement (A), un entraineur (10) qui, pendant un mouvement de pivot de cet appui de marchandises (2) en position de maintien (H), fait impact sur le bras pivotant (4) arrière ou inférieur de l'appui de marchandises (2) disposé à chaque fois au-dessus ou devant et dirigés vers le côté d'alimentation ou de prélèvement (A).

13. Dispositif de stockage selon l'une des revendications 1 à 11, caractérisée en ce qu'un bras pivotant d'un appui de marchandises (2) est relié à un bras pivotant de l'appui de marchandises (2) disposé à chaque fois devant ou au-dessus en direction du côté d'alimentation ou de prélèvement (A), au moyen d'un bras de liaison (23), en ce que chaque bras de liaison (23) entre en contact par une articulation avec les bras pivotants qui lui sont associés, que le point d'articulation de ces bras de liaison (23) est conçu sur l'appui de marchandises (2) disposé à chaque fois devant ou au-dessus comme un trou oblong (24) dans lequel est guidé un entraîneur (25) de manière coulissante et qu'au moment du pivotement de l'appui de marchandises (2) arrière ou inférieur dans sa position de maintien, cet entraîneur (25) est disposé dans une position finale du trou oblong (24).

14. Dispositif de stockage selon l'une des revendications 1 à 13, caractérisée en ce qu'aux appuis de marchandises (2), il est prévu à chaque fois au moins un étrier auxilaire (26) qui est articulé à un point d'articulation (27) de manière pivotante à l'appui de marchandises (2) et que l'étrier auxiliaire (26) (les étriers) est (sont) relié(s) à un engrenage (28) se composant de préférence d'un organe d'accouplement qui transforme le mouvement relatif de l'appui de marchandises (2) par rapport aux bras pivotants (34) qui lui sont associés en un mouvement relatif de l'étrier auxiliaire (des étriers auxiliaires) (26) par rapport à cet appui de marchandises (2).

15. Dispositif de stockage selon l'une des revendications 1 à 14, caractérisée en ce que les appuis de marchandises (2) associés au support d'appuis sont conçus chacun en tant que dispositif de maintien abaissé pour les appuis de marchandises (2) disposés derrière ou en dessous de lui dans le sens d'alimentation et que les appuis de marchandises (2) disposent d'une butée de maintien abaissé (12), qui en positon de maintien de cet appui de marchandises (2) fait impact sur l'appui de marchandises (2) disposé derrière ou en-dessous et/ou sur la marchandise soutenue par cet appui de marchandises (2), par zone.

16. Dispositif de stockage selon l'une des revendications 1 à 15, caractérisée en ce que chaque appui de marchandises (2) dispose d'une surface d'appui (14), pour le soutien de la marchandise, surface dont la forme est adaptée de préférence à la zone de la marchandise devant venir en impact avec la surface d'appui (14).

17. Dispositif de stockage selon l'une des revendications 1 à 16, caractérisée en ce que la surface d'appui (14) se compose d'une matière différente par rapport à l'appui de marchandises (2) et/ou par rapport à la butée (12) de maintien abaissé.

18. Dispositif de stockage selon l'une des revendications 1 à 17, caractérisée en ce que la surface d'appui (14) est prévue sur au moins une saillie de l'appui de marchandises (2) qui est dirigée vers le côté d'alimentation ou de prélevement (A).

19. Dispositif de stockage selon l'une des revendications 1 à 18, caractérisée en ce que l'appui de marchandises (2) d'un support d'appui (L), avant ou supérieur dirigé vers le côté d'alimentation ou de prélèvement (A), peut être verrouillé dans sa position de maintien.
